(19) Europäisches Patentamt

European Patent Office

Office européen des brevets

(11) EP 0 892 388 B1

(12) EUROPEAN PATENT SPECIFICATION

(45) Date of publication and mention
of the grant of the patent:
**20.09.2000 Bulletin 2000/38**

(51) Int Cl.[7]: **G10L 17/00**

(21) Application number: **98305391.9**

(22) Date of filing: **07.07.1998**

(54) **Method and apparatus for providing speaker authentication by verbal information verification using forced decoding**

Verfahren und Vorrichtung zur Sprechererkennung durch Prüfung von mündlicher Information mittels Zwangsdekodierung

Méthode et dispositif d'authentification d'interlocuteur par vérification d'information utilisant un décodage forcé

(84) Designated Contracting States:
**DE FR GB**

(30) Priority: **18.07.1997 US 897174**

(43) Date of publication of application:
**20.01.1999 Bulletin 1999/03**

(73) Proprietor: **LUCENT TECHNOLOGIES INC.
Murray Hill, New Jersey 07974-0636 (US)**

(72) Inventors:
• **Juang, Biing-Hwang
Warren, New Jersey 07059 (US)**
• **Li, Qi P.
New Providence, New Jersey 07974 (US)**
• **Lee, Chin-Hui
New Providence, New Jersey 07974 (US)**
• **Zhou, Qiru
Scotch Plains, New Jersey 07076 (US)**

(74) Representative:
**Watts, Christopher Malcolm Kelway, Dr. et al
Lucent Technologies (UK) Ltd,
5 Mornington Road
Woodford Green Essex, IG8 0TU (GB)**

(56) References cited:
**WO-A-96/17341**

• **WILCOX L ET AL: "SEGMENTATION OF SPEECH USING SPEAKER IDENTIFICATION" 19 April 1994 , PROCEEDINGS OF THE INTERNATIONAL CONFERENCE ON ACOUSTICS, SPEECH, SIGNAL PROCESSING (ICASSP), SPEECH PROCESSING 1. ADELAIDE, APR. 19 - 22, 1994, VOL. VOL. 1, PAGE(S) I-161 - I-164 , INSTITUTE OF ELECTRICAL AND ELECTRONICS ENGINEERS XP000529378 * page I-162, right-hand column, line 1 - page I-163, right-hand column, line 42 ***
• **MATSUI T ET AL: "CONCATENATED PHONEME MODELS FOR TEXT-VARIABLE SPEAKER RECOGNITION" 27 April 1993 , SPEECH PROCESSING, MINNEAPOLIS, APR. 27 - 30, 1993, VOL. VOL. 2, NR. -, PAGE(S) II-391 - 394 , INSTITUTE OF ELECTRICAL AND ELECTRONICS ENGINEERS XP000427808 * page II-391, left-hand column, line 19 - page II-392, right-hand column * * page II-393, right-hand column, line 25 - page II-394, left-hand column ***
• **LIOU H -S ET AL: "A SUBWORD NEURAL TREE NETWORK APPROACH TO TEXT-DEPENDENT SPEAKER VERIFICATION" PROCEEDINGS OF THE INTERNATIONAL CONFERENCE ON ACOUSTICS, SPEECH, AND SIGNAL PROCESSING (ICASSP), DETROIT, MAY 9 - 12, 1995 SPEECH, vol. VOL. 1, 9 May 1995, pages 357-360, XP000658002 INSTITUTE OF ELECTRICAL AND ELECTRONICS ENGINEERS**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

### Field of the Invention

The subject matter of the present invention relates generally to the field of speaker authentication and in particular to a method of authenticating the identity of a speaker based upon the verbal information content contained in an utterance provided by the speaker.

### Background of the Invention

Speaker authentication is the process of either identifying or verifying the identity of a speaker based upon an analysis of a sample of his or her speech using previously saved information. By definition, speaker verification (SV) is the process of verifying whether the identity of an unknown speaker is, in fact, the same as an identity being claimed therefor (usually by the speaker himself or herself), whereas speaker identification (SID), on the other hand, is the process of identifying an unknown speaker as a particular member of a known population of speakers.

The applications of speaker authentication include, for example, access control for telephones, computer networks, databases, bank accounts, credit-card funds, automatic teller machines, building or office entry, *etc.* Automatic authentication of a person's identity based upon his or her voice is quite convenient for users, and, moreover, it typically can be implemented in a less costly manner than many other biometric methods, such as, for example, fingerprint analysis. For these reasons, speaker authentication has recently become of particular importance in, for example, mobile and wireless applications.

Conventionally, speaker authentication has been performed based upon previously saved information which, at least in part, represents particular vocal characteristics of the speaker whose identity is to be verified. Specifically, the speech signal which results from a speaker's utterance is analyzed to extract certain acoustic "features" of the speech signal, and then, these features are compared with corresponding features which have been extracted from previously uttered speech (preferably consisting of the same word or phrase) spoken by the same individual. The speaker is then identified, or his or her claimed identity is verified, based on the results of such comparisons. In particular, previously uttered speech samples are used to produce speech "models" which may, for example, comprise stochastic models such as Hidden Markov Models (HMMs), well known to those skilled in the art. Note specifically, however, that the models employed in all such prior art speaker authentication systems are necessarily "speaker-dependent" models, since each model is based solely on the speech of a single individual.

In order to produce speaker-dependent speech models, an enrollment session which includes a speech model "training" process is typically required for each speaker whose identity is to be capable of authentication by the system. This training process requires the speaker (whose identity is known during the enrollment session) to provide multiple (*i.e.,* repeated) training utterances to the system for use in generating sufficiently robust models. Specifically, acoustic features are extracted from these repeated training utterances, and the models are then built based on these features. Finally, the generated models are stored in a database, each model being associated with the (known) identity of the given individual who trained it.

Once the models for all potential speakers have been trained, the system can be used in its normal "test" mode, in which an unknown speaker (*i.e.,* a speaker whose identity is to be either ascertained or verified) provides a test utterance for use in the authentication process. In particular, features extracted from the test utterance are compared with those of the pre-trained, speaker-dependent models, in order to determine whether there is a "match." Specifically, when the system is used to perform speaker verification, the speaker first provides a claim of identity, and only the model or models associated with that identified individual need to be compared to the test utterance. The claimed identity is then either accepted (*i.e.*, verified) or rejected based upon the results of the comparison. When the system is used for speaker identification, on the other hand, models associated with each of a plurality of individuals are compared to the test utterance, and the speaker is then identified as being a particular one of those individuals (or is rejected as being unidentified) based upon the results of these multiple comparisons.

The document Speech Processing, 27 April 1993, vol. 2, pages II-391 to II-394, Minneapolis, IEEE, XP 000 427 808, Matsui T. et al, "Concatenated phoneme models for text-variable speaker recognition", is an example of such prior art in which speaker specific subword models are used.

It would be advantageous if a technique for performing speaker authentication were available which did not require the substantial investment in time and effort which is required to effectuate the training process for each of a potentially large number of individuals.

### Summary of the Invention

We have recognized that, contrary to the teachings of prior art speaker authentication systems, speaker authentication may be performed without the need for performing time-consuming speaker-specific enrollment (*i.e*, "training") sessions prior to the speaker authentication process. In particular, and in accordance with the principles of the instant inventive technique, the verbal information content of a speaker's utterance, rather than the vocal characteristics of the speaker, is used to identify or verify the identity of a speaker. Moreover, this "verbal information verification" (VIV) technique is performed based on a forced decoding of the spoken utterance based on a particular pass-phrase associated with a given speaker. In this manner, "speaker-independent" models are employed, thereby eliminating the need for each potential system user to perform a complex individual training (*i,e.*, enrollment) session.

Specifically, in accordance with the present invention, a method and apparatus for authenticating a proffered identity of a speaker is provided. Features of a speech utterance spoken by a speaker are compared with at least one sequence of speaker-independent speech models, where one of these sequences of speech models corresponds to speech reflecting a sequence of one or more words associated with an individual having said proffered identity. In particular, the sequence of speech models is determined based on a subword transcription of the associated sequence of one or more words. Then, a confidence level that the speech utterance in fact reflects the sequence of one or more words associated with the individual having said proffered identity is determined based on said comparison.

In accordance with one illustrative embodiment of the present invention, the proffered identity is an identity claimed by the speaker, and the claimed identity is verified based upon the determined confidence level. In accordance with another illustrative embodiment, each of a plurality of proffered identities is checked in turn to identify the speaker as being a particular one of a corresponding plurality of individuals. The features of the speech utterance may, for example, comprise cepstral (*i.e.*, frequency) domain data, and the speaker-independent speech models may, for example, comprise Hidden Markov Models reflecting individual phonemes (*e.g.,* HMMs of phone and allophone models of individual phonemes).

### Brief Description of the Drawings

Figure 1 shows a prior art system for performing speaker authentication in which speaker-dependent speech models are used to verify a claimed identity.

Figure 2 shows a system which performs speaker verification using the technique of verbal information verification.

Figure 3 shows an illustrative system for performing speaker verification by verbal information verification using forced decoding in accordance with an illustrative embodiment of the present invention.

### Detailed Description

The technique of verbal information verification (VIV) consists of the verification of spoken information content versus the content of a given data profile. The content may include, for example, such information as a personal pass-phrase or a personal identification number (*i.e.*, a "PIN"), a birth place, a mother's maiden name, a residence address, *etc.* The verbal information contained in a spoken utterance is advantageously "matched" against the data profile content for a particular individual if and only if the utterance is determined to contain identical or nearly identical information to the target content. Preferably, at least some of the information content which must be matched to authenticate the identity of a given individual should be "secret" information which is likely to be known only to the individual himself or herself. In accordance with the inventive technique of the present invention, verbal information verification is performed using forced decoding.

Important applications for the technique of verbal information verification using forced decoding in accordance with an illustrative embodiment of the present invention include remote speaker authentication for bank, telephone card, credit card, benefit, and other account accesses. In these cases, a VIV system using forced decoding in accordance with an illustrative embodiment of the present invention is charged with making a decision to either accept or reject a speaker having a claimed identity based on the personal information spoken by the speaker. In current, non-automated systems, for example, after an account number is provided, an operator may verify a claimed identity of a user by asking a series of one or more questions requiring knowledge of certain personal information, such as, for example, the individual's birth date, address, home telephone number, *etc.* The user needs to answer the questions correctly in order to gain access to his or her account. Similarly, an automated, dialog-based VIV system, implemented using forced decoding in accordance with an illustrative embodiment of the present invention, can advantageously prompt the user by asking one or more questions which may, for example, be generated by a conventional text-to-speech synthesizer, and can then receive and verify the user's spoken response information automatically. (Note that text-to-speech synthesizers are well-known and familiar to those of ordinary skill in the art.) Moreover, in accordance with the principles of the present invention, such an illustrative application can be realized without having to train the speaker-dependent speech models required in prior art speaker authentication approaches.

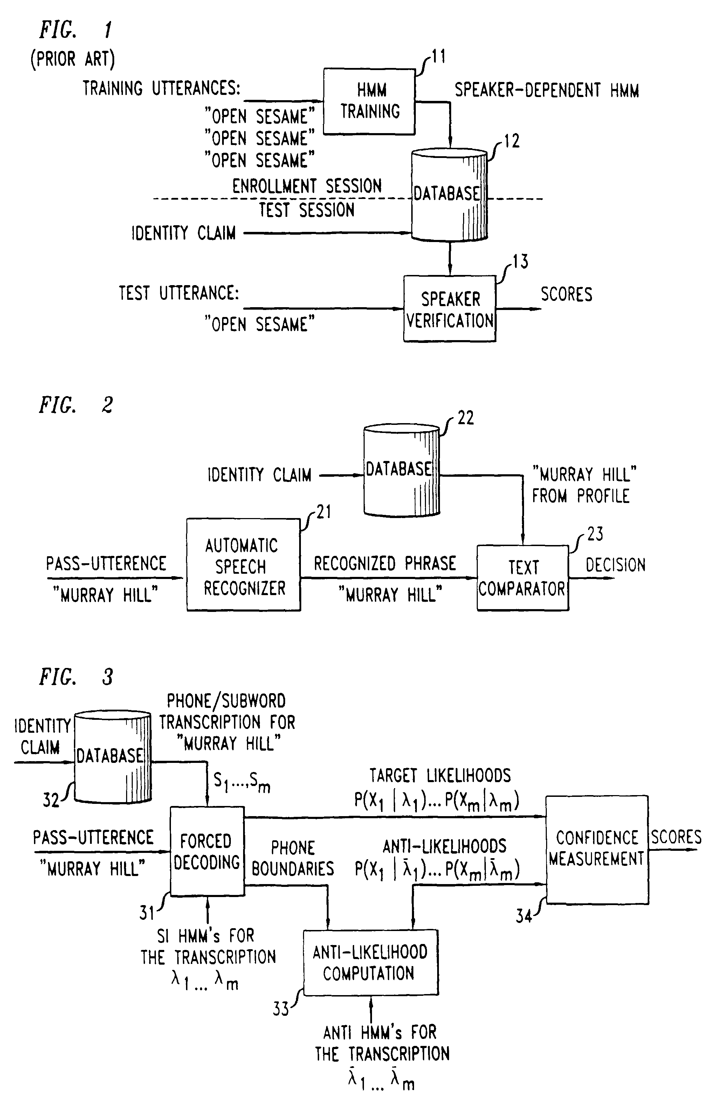

In order to understand the illustrative embodiments of the present invention, a prior art system in accordance with the description provided in the background section above will first be described. In particular, Figure 1 shows a prior art system for performing speaker authentication in which speaker-dependent speech models are used to verify a claimed identity. In the operation of the system of Figure 1, there are two different types of sessions which are performed -- enrollment sessions and test sessions.

In an enrollment session, an identity, such as an account number, is assigned to a speaker, and the speaker is asked by HMM Training module 11 to provide a spoken pass-phrase, *e.g.,* a connected digit string or a phrase. (In the sample enrollment session shown in Figure 1, the pass-phrase "Open Sesame" is used.) The system then prompts the speaker to repeat the pass-phrase several times, and a speaker dependent hidden Markov model (HMM) is constructed by HMM Training module II based on the plurality of enrollment utterances. The HMM is typically constructed based on features such as cepstral (*i.e.,* frequency domain) data, which features have been extracted from the enrollment (*i.e.,* training) utterances. The speaker-dependent HMM is stored in database 12 and associated with the given identity (*e.g.,* the account number). Note that a separate enrollment session must be performed for each (potential) speaker -- *i.e.,* for each potential user of the system whose identity is to be capable of verification.

In a test session (which must necessarily be performed subsequent to an enrollment session performed by the same individual), an identity claim is made by the speaker, and in response thereto, speaker verifier 13 prompts the speaker to utter the appropriate pass-phrase. The speaker's test utterance is compared (by speaker verifier 13) against the pre-trained, speaker dependent HMM which has been stored in database 12 and associated with the claimed identity. Speaker verifier 13 then accepts the speaker as having the claimed identity if the matching score (as produced by the comparison of the test utterance against the given HMM) exceeds a predetermined threshold. Otherwise the speaker's claimed identity is rejected.

Note that the pass-phrase may or may not be speaker-dependent. That is, each speaker (*i.e.,* system user) may have an individual pass-phrase associated therewith, or, alternatively, all users may be requested to utter the same pass-phrase. In the former case, each speaker may be permitted to select his or her own pass-phrase, which may or may not be secret -- *i.e.,* known only to the speaker himself or herself. Obviously, it is to be expected that the authentication accuracy of the system will be superior if the pass-phrases are, in fact, different. However, in either case, the vocal characteristics of the individual speakers (at least) are being used to distinguish one speaker from another.

As described above and as can be seen in the drawing, the prior art system of Figure 1 performs speaker verification. However, a similar prior-art approach (*i.e.,* one using speaker-dependent HMMs) may be employed in a similar manner to perform speaker identification instead. In particular, the speaker does not make an explicit identity claim during the test session. Rather, speaker verifier 13 performs a comparison between the speaker's test utterance and the pre-trained, speaker dependent HMMs which have been stored in database 12 for each potential speaker. Obviously, such a speaker identification approach may not be practical for applications where it is necessary that the speaker is to be identified from a large population of speakers.

Figure 2 shows a system which performs speaker verification using the technique of verbal information verification. The system of Figure 2 performs speaker verification using verbal information verification with use of a conventional automatic speech recognition subsystem. Note that only the operation of the test session is shown for the system of Figure 2 (as it is for the illustrative system of Figure 3). The enrollment session for speaker authentication systems which employ the technique of verbal information verification advantageously require no more than the association of each individual's identity with a profile comprising his or her set of associated information -- *e.g.,* a personal pass-phrase or a personal identification number (*i. e.,* a "PIN"), a birth place, a mother's maiden name, a residence address, *etc.* This profile information and its association with a specific individual may be advantageously stored in a database for convenient retrieval during a test session -- illustratively, database 22 of the system of Figure 2 and database 32 of the system of Figure 3 serves such a purpose.

The test session for the system of Figure 2 begins with an identity claim made by the speaker. Then, automatic speech recognizer 21 prompts the speaker to utter the appropriate pass-phrase, and the speaker's pass-utterance is processed by automatic speech recognizer 21 in a conventional manner to produce a recognized phrase. Note in particular that automatic speech recognizer 21 performs speaker-independent speech recognition, based on a set of speaker-independent speech models in a wholly conventional manner. (The speaker independent speech models may comprise HMMs or, alternatively, they may comprise templates or artificial neural networks, each familiar to those skilled in the art.) For example, automatic speech recognizer 21 may extract features such as cepstral (*i.e.,* frequency domain) data from the test utterance, and may then use the extracted feature data for comparison with stochastic feature data which is represented in the speaker-independent HMMs. (Speaker-independent automatic speech recognition based on cepstral features is well known and familiar to those skilled in the art.) In the sample test sessions shown in both Figures 2 and 3, the pass-utterance being supplied (and recognized) is "Murray Hill," the name of a town in New Jersey which may, for example, be the speaker's home town, and may have been uttered in response to a question which specifically asked the speaker to state his or her home town.

Once the uttered phrase has been recognized by automatic speech recognizer 21, the system of Figure 2 determines whether the recognized phrase is consistent with (*i. e.,* "matches") the corresponding information content associated with the individual having the claimed identity. In particular, text comparator 23 retrieves from database 22 the particular portion of the profile of the individual having the claimed identity which relates to the particular utterance being provided (*i. e.,* to the particular question which has been asked of the speaker). In the sample test session shown in Figure 2, the text "Murray Hill" is retrieved from database 22, and the textual representation of the recognized phrase -- "Murray Hill" - is matched thereto. In this case, a perfect match is found, and therefore, it may be concluded by the illustrative system of Figure 2 that the speaker is, in fact, the individual having the claimed identity.

As described above and as can be seen in the drawing, the system of Figure 2 performs speaker <u>verification</u>. However, it will be obvious to those skilled in the art that the same approach (*i. e.,* one using speaker-independent automatic speech recognition and text comparison) may be employed in a nearly identical manner to perform speaker identification instead. In particular, the speaker does not make an explicit identity claim during the test session. Rather, text comparator 23 performs a comparison between the textual representation of the recognized phrase and the corresponding (based, for example, on the particular question asked of the speaker) textual information which has been stored in database 22 for <u>each</u> potential speaker. Then, the identity of the potential speaker which results in the best match is identified as the actual speaker. Obviously, such a speaker identification approach may be most practical for applications where it is necessary that the speaker is to be identified from a relatively small population of speakers.

For purposes of speaker verification (as opposed to speaker identification) in particular, it can be seen that the approach employed by the system shown in Figure 2 and described above does not utilize the information in the profile in the most effective manner possible. This is because the speech recognition being performed (for example, by automatic speech recognizer 21) fails to take into account the fact that it is <u>expected</u> that the content of the utterance matches the corresponding information in the profile of the individual having the claimed identity. In other words, it is only of interest whether the given utterance matches certain <u>known</u> information. Speech utterance <u>verification</u> -- the process of matching a speech utterance against a known or expected word or phrase -- is well known to be more effective than is "blind" speech recognition - the process of identifying *(i.e.,* recognizing) a spoken word or phrase as any of all possible words or phrases by, for example, comparing the utterance against all possible sequences of words or subwords *(e.g.,* phonemes).

Figure 3 shows an illustrative system for performing speaker verification using the technique of verbal information verification in accordance with an illustrative embodiment of the present invention. In this second illustrative system, information which is stored in an individual's profile is more effectively used than it is in the system of Figure 2. In particular, the illustrative system of Figure 3 implements the inventive technique of verbal information verification using forced decoding by adapting the technique of utterance verification thereto. (The technique of utterance verification is familiar to those skilled in the art. In the past, it has been employed to improve the performance of automatic speech recognition systems by increasing the confidence level of a recognized word or phrase. In particular, it has been advantageously applied to the problem of keyword spotting and non-keyword rejection. Specifically, after the recognizer has initially identified a word or phrase as having been spoken, an utterance verification subsystem performs a re-evaluation of the utterance directly against the model data for the identified word or phrase, thereby either verifying the accuracy of the recognizer's initial determination or else rejecting it. Of course, the technique of utterance verification has not heretofore been applied in the context of speaker authentication at all.)

Specifically, the illustrative system of Figure 3 uses a subword transcription of the text in an individual's profile *(i.e.,* a known correct answer) to decode the test utterance. This approach to the decoding of an utterance is referred to herein as "forced decoding," an approach familiar to those skilled in the art of utterance verification. In particular, the forced decoding of the test utterance advantageously provides subword segmentation boundaries for the utterance. Then, based on these boundaries, the utterance is matched against the expected sequence of subword *(e.g.,* phone) models to generate phone likelihood scores. The utterance is also matched against a sequence of anti-models (familiar to those skilled in the art) to generate anti-likelihood scores. (The subword models and anti-models illustratively comprise HMMs. Alternatively, however, they may comprise templates or artificial neural networks, each familiar to those skilled in the art.) Finally, the illustrative system of Figure 3 applies hypothesis test techniques to decide whether to accept or reject the test utterance. (Note that the hypothesis test techniques illustratively employed herein are based upon those used for utterance verification, and are therefore familiar to those skilled in the art.)

Referring specifically to Figure 3 and the operation of the illustrative system shown therein, an identity claim is first provided to the system. Then, forced decoding module 31 operates to decode the test utterance based on the phone/subword transcription, $S_i$, for the pass-phrase which has been stored in database 32 in the profile of the individual having the claimed identity. In addition, a sequence of speaker-independent phone models, $\lambda_i$, which sequence corresponds to the phone transcription retrieved from database 32 is provided to forced decoding module 31 for use in performing the decoding. (The set of speaker-independent phone models from which the sequence $\lambda_i$ is generated may comprise a fixed set of HMMs, one for each phone of the language.) The forced decoding may, for example, be performed with use of the well known Viterbi algorithm, familiar to those of ordinary skill in the art. As a result of the forced decoding, a corresponding sequence of target likelihoods, $P(X_i|\lambda_i)$, is generated, each likelihood representing the quality of the match of one of the models, $\lambda_i$, against its corresponding portion of the test utterance.

In order to improve the performance of the illustrative system of Figure 3, anti-models, familiar to those skilled in the art, are also used in the hypothesis testing process. Specifically, forced decoding module 31 provides the determined phone boundaries to anti-likelihood computation module 33, which, based on a sequence of anti-models (*i.e.,* anti-HMMs) corresponding to the phone transcription retrieved from database 32 and the phone boundaries provided, generates a corresponding sequence of anti-likelihoods, $P(X_i|\lambda_i)$, each anti-likelihood representing the quality of the match of one of the anti-models, $\lambda_i$, against its corresponding portion of the test utterance. (As is well known to those skilled in the art, an anti-model corresponding to a given subword model may be trained by using data of a set of subwords which are highly confusable with the given subword.)

As the final step in the operation of the illustrative system of Figure 3, confidence measurement module 34 uses the sequence of target likelihood scores and the sequence of anti-likelihood scores to determine an overall confidence measure that the pass-phrase associated with the individual having the claimed identity is, in fact, the phrase of the test utterance. This overall confidence measure may be computed in any of a number of ways which will be obvious to those skilled in the art, and, similarly, given an overall confidence measure, the claimed identity may be accepted or rejected based thereupon in a number of ways which will also be obvious to those skilled in the art. Nonetheless, the following description offers at least one illustrative method for computing an overall confidence measure and determining whether the claimed identity is to be accepted or rejected.

During the hypothesis test for segmented subwords, confidence scores are calculated. Although several confidence measures have been used in prior art systems which employ utterance verification, in accordance with one illustrative embodiment of the present invention a "normalized confidence measure" is advantageously used for at least two reasons. First, conventional (*i. e.,* non-normalized) confidence measures have a large dynamic range. It is advantageous in the application of the present invention to use a confidence measure which has a stable numerical range, so that thresholds can be more easily determined. Second, it is advantageous in a speaker authentication system that thresholds be adjustable based on design specifications which relate to the particular application thereof.

The illustrative normalized confidence measure described herein is based on two scores. In the first stage, subword scores are evaluated for acceptance or rejection on each subword. Then, in the second stage, an utterance score is computed based on the number of acceptable subwords.

Specifically, following the concept of "inspection by variable" in hypothesis testing familiar to those skilled in the art, we define a confidence measure for a decoded subword $n$ in an observed speech segment $O_n$ as

$$C_n = \frac{\log P(O_n|\lambda_n^t) - \log P(O_n|\lambda_n^a)}{\log P(O_n|\lambda_n^t)} = 1 - \frac{\log P(O_n|\lambda_n^a)}{\log P(O_n|\lambda_n^t)}, \tag{1}$$

where $\lambda_n^t$ and $\lambda_n^a$ are the corresponding target and anti-models for subword unit $n$, respectively, $P(.)$ is the likelihood of the given observation matching the given model, assuming that $\log P(O_n|\lambda_n^t) > 0$. This subword confidence score thus measures the difference between a target score and an anti-model score, divided by the target score. $C_n > 0$ if and only if the target score is larger than the anti-model score. Ideally, $C_n$ should be close to 1.

Next, we define the "normalized confidence measure" for an utterance containing $N$ subwords as

$$M = \frac{1}{N} \sum_{n=1}^{N} f(C_n), \tag{2}$$

where

$$f(C_n) = \begin{cases} 1, & if\ C_n \geq \theta\ ; \\ 0, & otherwise, \end{cases} \tag{3}$$

and $\theta$ is a subword threshold, which may be a common threshold for all subwords or may be subword-specific. in either case, the normalized confidence measure, $M$, will be in a fixed range $0 \leq M \leq 1$. Note that a subword is accepted and contributes to the utterance confidence measure if and only if its subword confidence score, $C_n$, is greater than or equal to the subword's threshold, $\theta$. Thus, $M$ is a statistic which measures the percentage of "acceptable" subwords in the utterance. $M = 0.8$, for example, means that 80 percent of the subwords in an utterance are acceptable. In this manner, an utterance threshold can be advantageously determined based on a given set of specifications for system performance and robustness.

Once an utterance score is determined, a decision can be made to either reject or accept an utterance, as follows:

$$\begin{cases} Acceptance: & M_i \geq T_i \; ; \\ Rejection: & M_i < T_i \; , \end{cases} \tag{4}$$

where $M_i$ and $T_i$ are the corresponding confidence score and threshold for utterance $i$. For a system which bases its decision whether the claimed identity is to be accepted or rejected on multiple utterances *(i.e, a plurality of pass-phrases)*, either one global threshold, *i.e., $T = T_1 = \ldots = T_i$*, or multiple thresholds, *i.e., $T \neq T_1 \neq \ldots \neq T_i$*, may be used. The thresholds may be either context *(i.e., information field)* dependent (CD) or context independent (CI). They may also be either speaker dependent (SD) or speaker independent (SI).

For robust verification, two global thresholds for a multiple-question trial ma be advantageously used as follows:

$$T_i = \begin{cases} T_{low}, & when \; T_{low} \leq M_i < T_{high} \; at \; the \; first \; time \\ & and \; T_{low} \; can \; be \; used \; only \; once, \\ T_{high}, & otherwise, \end{cases} \tag{5}$$

where $T_{low}$ and $T_{high}$ are two thresholds, with $T_{low} < T_{high}$. Equation (5) means that $T_{low}$ can be used only once in one verification trial. Thus, if a speaker has only one fairly low score as a result of all of his or her utterances *(i.e, separate pass-phrases)*, the speaker still has the chance to pass the overall verification trial. This may be particularly useful in noisy environments or for speakers who may not speak consistently.

To further improve the performance of an illustrative speaker authentication system using the technique of verbal information verification in accordance with the present invention, both speaker and context dependent thresholds may be advantageously employed. To reduce the risk of a false rejection, the upper bound of the threshold for utterance $i$ of a given speaker may be selected as

$$t_i = \min \{M_{i,j}\}, \qquad j = 1, \ldots, J, \tag{6}$$

where $M_{i,j}$ is the confidence score for utterance $i$ on the $j$'th trial, and where $J$ is the total number of trials of the speaker on the same context utterance $i$. Due to changes in voice, channels, and environment, the same speaker may have different scores even for the same context utterance. We therefore define an "utterance tolerance interval, "$\tau$, as

$$T_i = t_i - \tau, \tag{7}$$

where $t_i$ is defined as in Equation (6), $0 \leq \tau < t_i$, and $T_i$ is a CD utterance threshold for Equation (4). By applying the tolerance interval, a system can still accept a speaker even though his or her utterance score $M_i$ on the same context is lower than before. For example, assume that a given speaker's minimal confidence measure on the answer to the $i$'th question is $t_i = 0.9$. If an illustrative speaker authentication system using the technique of verbal information verification in accordance with the present invention has been designed with $\tau = 0.06\%$, we have $T_i = 0.9 - 0.06 = 0.84$. This means that the given speaker's claimed identity can still be accepted as long as 84% of the subwords of utterance $i$ are acceptable.

In the system evaluation, $\tau$ can be reported with error rates as a guaranteed performance interval. On the other hand, in the system design, $\tau$ can be used to determine the thresholds based on a given set of system specifications. For example, a bank authentication system may need a smaller value of $\tau$ to ensure lower false acceptance rates at a higher security level, while a voice mail system may prefer the use of a larger value of $\tau$ to reduce false rejection rates for user friendly security access.

In accordance with one illustrative embodiment of a speaker authentication system employing verbal information verification using forced decoding in accordance with the present invention, the system may apply SI thresholds in accordance with Equation (5) for new users and switch to SD thresholds when the thresholds in accordance with Equation (6) are determined. Such SD thresholds may, for example, advantageously be stored in credit cards or phone cards for user authentication applications.

As described above and as can be seen in the drawing, the illustrative system of Figure 3 performs speaker verification. However, it will be obvious to those skilled in the art that the same inventive approach *(i. e.,* one using speaker-independent phoneme models, phone/subword transcriptions of profile information, and forced decoding of the test utterance) may be employed in a nearly identical manner to perform speaker identification instead. In particular, the speaker does not make an explicit identity claim during the test session. Rather, forced decoding module 31 performs a forced decoding of the test utterance based on each of the corresponding (based, for example, on the particular question asked of the speaker) transcriptions which have been stored in database 22 for each potential speaker, and confidence measurement module 34 produces scores for each such potential speaker. Then, the identity of the potential speaker which results in the best score is identified as the actual speaker. Obviously, such a speaker identification approach may be most practical for applications where it is necessary that the speaker is to be identified from a relatively small population of speakers.

It should be noted that in order to provide a more robust system, the illustrative system of Figure 3 may advantageously require that multiple questions be asked of the speaker, and that, for example, all utterances provided in response thereto match the corresponding information in the profile of the individual having the claimed identity. Otherwise, any other person who knew the answer to the single posed question for a given individual (whose profile is included in the database) could act as an imposter and could successfully fool the system of Figure 2 into believing he or she was the claimed individual. By using multiple questions, the system becomes more robust, since it is less likely that anyone other than the person having the claimed identity would know the answers to all of the questions. Of course, it is also advantageous if the test session is not excessively long. One approach is to ask a small number of randomly selected questions *(e.g.,* three) out of a larger set of possible questions *(e.g.,* six), the answers to all of which are stored in the individual's profile in the database.

Another approach to providing a more robust system is to provide profile information which changes dynamically. For example, an individual's access profile may be updated to contain the date of last access. Then, when the given individual attempts to make a subsequent access, it is expected that only he or she is likely to know the date of last access, and is asked to provide it. Other techniques for adding robustness to the security of a speaker authentication system in accordance with the principles of the present invention will be obvious to those skilled in the art.

For clarity of explanation, the illustrative embodiments of the present invention has been presented as comprising individual functional blocks or modules. The functions these blocks represent may be provided through the use of either shared or dedicated hardware, including, but not limited to, hardware capable of executing software. For example, the functions of the modules presented herein may be provided by a single shared processor or by a plurality of individual processors. Moreover, use of the term "processor" herein should not be construed to refer exclusively to hardware capable of executing software. Illustrative embodiments may comprise digital signal processor (DSP) hardware, such as Lucent Technologies' DSP16 or DSP32C, read-only memory (ROM) for storing software performing the operations discussed below, and random access memory (RAM) for storing DSP results. Very large scale integration (VLSI) hardware embodiments, as well as custom VLSI circuitry in combination with a general purpose DSP circuit, may also be provided. Any and all of these embodiments may be deemed to fall within the meaning of the words "block," "module," or "processor," as used herein.

**Claims**

**1.** A method of authenticating a proffered identity of a speaker, the method comprising the steps of:

comparing features of a speech utterance spoken by the speaker with at least one sequence of one or more speaker-independent speech models, one of said sequences of said speech models corresponding to speech reflecting a sequence of one or more words associated with an individual having said proffered identity, said one of said sequences of said speech models determined based on a subword transcription of said given sequence of one or more words, wherein said subword transcription comprises a sequence of one or more subwords;

determining a confidence level that the speech utterance reflects said sequence of one or more words associated with said individual having said proffered identity based on said comparison.

**2.** The method of claim 1 wherein the proffered identity is an identity which has been claimed to be that of the speaker.

3. The method of claim 2 wherein the claim of identity has been made by the speaker.

4. The method of claim 3 further comprising the step of receiving the claim of identity from the speaker.

5. The method of claim 4 further comprising the step of verifying the claimed identity of the speaker based on the determined confidence level.

6. The method of claim 1 wherein the proffered identity is one of a plurality of possible identities, each possible identity having a corresponding sequence of one or more words associated with a corresponding individual having said possible identity.

7. The method of claim 6 further comprising the step of identifying the speaker as having the proffered identity based on the determined confidence level.

8. The method of claim 1 wherein the speaker-independent speech models comprise Hidden Markov Models.

9. The method of claim 8 wherein the speaker-independent speech models comprise Hidden Markov Models reflecting individual phonemes.

10. The method of claim 1 wherein the features of the speech utterance comprise cepstral domain data.

11. The method of claim 1 wherein the comparing step produces a sequence of one or more target likelihood scores corresponding to said sequence of subwords, the target likelihood scores representing a likelihood of a match between one of said subwords in said subword sequence and a corresponding portion of said speech utterance.

12. The method of claim 11 wherein the determining step determines the confidence level that the speech utterance reflects said sequence of one or more words associated with said individual having said proffered identity based on a sequence of one or more confidence scores, each confidence score based on a corresponding one of said target likelihood scores.

13. The method of claim 12 wherein the confidence scores are further based on a corresponding sequence of one or more anti-likelihood scores, each anti-likelihood score representing a likelihood of a match between an anti-model corresponding to said one of said subwords in said subword sequence and said corresponding portion of said speech utterance.

14. The method of claim 13 wherein the confidence scores are combined to produce a normalized confidence measure representing a fraction of said subwords in said subword sequence which are likely to match said corresponding portion of said speech utterance.

15. The method of claim 14 further comprising the step of authenticating the proffered identity as being that of the speaker based upon said normalized confidence measure.

16. The method of claim 14 wherein the comparing and determining steps are each performed a corresponding plurality of times based on a plurality of different speech utterances and a corresponding plurality of different sequences of one or more words associated with said individual having said proffered identity, thereby resulting in a corresponding plurality of said normalized confidence measures being produced, the method further comprising the step of authenticating the proffered identity as being that of the speaker based upon a comparison of said plurality of said normalized confidence measures with a corresponding plurality of thresholds.

17. An apparatus for authenticating a proffered identity of a speaker, the apparatus comprising:

   a comparator which compares features of a speech utterance spoken by the speaker with at least one sequence of one or more speaker-independent speech models, one of said sequences of said speech models corresponding to speech reflecting a sequence of one or more words associated with an individual having said proffered identity, said one of said sequences of said speech models determined based on a subword transcription of said given sequence of one or more words, wherein said subword transcription comprises a sequence of one or more subwords;

a processor which determines a confidence level that the speech utterance reflects said sequence of one or more words associated with said individual having said proffered identity based on said comparison.

**18.** An apparatus for authenticating a preferred identity of a speaker, the apparatus comprising means arranged to carry out each step of a method as claimed in any of claims 1 to 16.

**Patentansprüche**

**1.** Verfahren zum Authentisieren einer vorgegebenen Identität eines Sprechers, mit folgenden Schritten:

eine von einem Sprecher gesprochene Sprachäußerung wird mit wenigstens einer Folge eines oder mehrerer Sprecherunabhängiger-Sprachmodelle verglichen, wobei eine der Folgen der Sprachmodelle einer Sprache entspricht, die eine Folge eines oder mehrerer Wörter widerspiegelt, die einer Person zugeordnet ist, die die vorgegebene Identität aufweist, wobei die eine Folge aus den Folgen der Sprachmodelle basierend auf einer Unterwortaufnahme der gegebenen Folge eines oder mehrerer Wörter bestimmt wird, wobei die Unterwortaufnahme eine Folge von einem oder von mehreren Unterworten umfaßt;
ein Vertrauensgrad wird bestimmt, daß die Sprachäußerung die Folge eines oder mehrerer Wörter, die der Person mit der vorgegebenen Identität zugeordnet sind, auf der Grundlage des Vergleichs widerspiegelt.

**2.** Verfahren nach Anspruch 1, bei welchem die vorgegebene Identität eine Identität ist, die als die Identität des Sprechers beansprucht worden ist.

**3.** Verfahren nach Anspruch 2, bei welchem die Beanspruchung der Identität durch den Sprecher vorgenommen worden ist.

**4.** Verfahren nach Anspruch 3, dadurch gekennzeichnet, daß der Identitätsanspruch des Sprechers empfangen wird.

**5.** Verfahren nach Anspruch 4, dadurch gekennzeichnet, daß die vom Sprecher beanspruchte Identität auf der Grundlage des ermittelten Vertrauensgrades geprüft wird.

**6.** Verfahren nach Anspruch 1, bei welchem die vorgegebene Identität eine aus einer Vielzahl von möglichen Identitäten ist, wobei jede mögliche Identität eine entsprechende Folge eines oder mehrerer Wörter aufweist, die einer entsprechenden Person mit der möglichen Identität zugeordnet ist.

**7.** Verfahren nach Anspruch 6, gekennzeichnet durch den Schritt des Identifizierens des Sprechers als denjenigen, der die vorgegebene Identität auf der Grundlage des ermittelten Vertrauensgrades besitzt.

**8.** Verfahren nach Anspruch 1, bei welchem die sprecherunabhängigen Sprachmodelle verborgene Markov Modelle (Hidden Markov Model) umfassen.

**9.** Verfahren nach Anspruch 8, bei welchem die sprecherunabhängigen Sprachmodelle verborgene Markov Modelle umfassen, welche individuelle Phoneme widerspiegeln.

**10.** Verfahren nach Anspruch 1, dadurch gekennzeichnet, daß die Merkmale der Sprachäußerung Cepstralbereichsdaten umfassen.

**11.** Verfahren nach Anspruch 1, dadurch gekennzeichnet, daß der Vergleichsschnitt eine Folge von einem oder mehreren Trefferwahrscheinlichkeitswerten erzeugt, die der Folge von Unterworten entsprechen, und daß die Trefferwahrscheinlichkeitswerte eine Wahrscheinlichkeit für eine Übereinstimmung zwischen einem der Unterworte in der Unterwortfolge und einem entsprechenden Teil der Sprachäußerung darstellen.

**12.** Verfahren nach Anspruch 11, dadurch gekennzeichnet, daß der Ermittlungsschritt den Vertrauensgrad ermittelt, daß die Sprachäußerung die Folge eines oder mehrerer Wörter, die der Person mit der vorgegebenen Identität zugeordnet ist, basierend auf einer Folge von einem oder mehreren Vertrauenswerten wiedergibt, wobei jeder Vertrauenswert auf einem entsprechenden Trefferwahrscheinlichkeitswert basiert.

**13.** Verfahren nach Anspruch 12, dadurch gekennzeichnet, daß die Vertrauenswerte ferner auf einer entsprechenden Folge eines oder mehrerer Anti-Wahrscheinlichkeitswerten basieren, wobei jeder Anti-Wahrscheinlichkeitswert eine Wahrscheinlichkeit für eine Übereinstimmung zwischen einem Anti-Modell, das einem oder mehreren Unterworten in der Unterwortabfolge entspricht, und dem entsprechenden Teil der Sprachäußerung darstellt.

**14.** Verfahren nach Anspruch 13, dadurch gekennzeichnet, daß die Vertrauenswerte kombiniert werden, um ein normiertes Vertrauensmß zu bilden, das einen Bruchteil der Unterworte in der Unterwortabfolge darstellt, die wahrscheinlich mit dem entsprechenden Abschnitt der Sprachäußerung übereinstimmen.

**15.** Verfahren nach Anspruch 14, gekennzeichnet durch den Schritt des Authentisierens der vorgegebenen Identität als die Identität des Sprechers, und zwar auf der Grundlage des normierten Vertrauensmaßes.

**16.** Verfahren nach Anspruch 14, dadurch gekennzeichnet, daß die Schritte des Vergleichens und Bestimmens mehrmals basierend auf einer Vielzahl von unterschiedlichen Sprachäußerungen und einer entsprechenden Vielzahl von unterschiedlichen Folgen eines oder mehrerer Wörter, die der Person mit der vorgegebenen Identität zugeordnet sind, ausgeführt werden, wodurch sich eine entsprechende Vielzahl von erzeugten normierten Vertrauensmaßen ergibt, wobei das Verfahren ferner die Authentisierung der vorgegebenen Identität als die Identität des Sprechers basierend auf einem Vergleich der normierten Vertrauensmaße mit einer entsprechenden Vielzahl von Schwellenwerten umfaßt.

**17.** Vorrichtung zum Authentisieren einer vorgegebenen Identität eines Sprechers, die folgende Merkmale umfaßt:

eine Vergleichseinrichtung, die die Merkmale einer vom Sprecher gesprochenen Sprachäußerung mit wenigstens einer Folge eines oder mehrerer Sprecherunabhängiger Sprachmodelle vergleicht, wobei eine der Folgen der Sprachmodelle einer Sprache entspricht, die eine Folge eines oder mehrerer Wörter wiedergibt, die einer Person mit der vorgegebenen Identität zugeordnet ist, wobei die eine Folge von Sprachmodellen basierend auf einer Unterwort-Aufnahme einer gegebenen Folge eines oder mehrerer Wörter bestimmt wird, und wobei die Unterwort-Aufnahme eine Folge eines oder mehrerer Unterwörter umfaßt;
einen Prozessor, der den Vertrauensgrad bestimmt,
daß die Sprachäußerung die Folge eines oder mehrerer Wörter, die der Person mit der vorgegebenen Identität zugeordnet ist, auf Grundlage des Vergleichs wiedergibt.

**18.** Vorrichtung zur Authentisierung einer vorgegebenen Identität eines Sprechers, gekennzeichnet durch eine Einrichtung, die zum Ausführen jedes Schrittes eines Verfahrens, wie es in einem der Ansprüche 1 bis 16 beansprucht ist, ausgebildet ist.

**Revendications**

**1.** Procédé d'authentification de l'identité proférée d'un locuteur, le procédé comprenant les étapes consistant à :

comparer des traits d'une parole prononcée par le locuteur à au moins une séquence d'un ou plusieurs modèles de parole indépendants du locuteur, l'une des séquences de ces modèles de parole correspondant à une parole représentant une séquence d'un ou plusieurs mots associés à un individu ayant l'identité proférée, cette séquence de modèles de parole étant déterminée sur la base d'une transcription de mots secondaires de la séquence donnée d'un ou plusieurs mots, dans lequel la transcription de mots secondaires comprend une séquence d'un ou plusieurs mots secondaires ;
déterminer un niveau de confiance selon lequel la parole prononcée représente la séquence d'un ou plusieurs mots associés à l'individu ayant l'identité proférée sur la base de la comparaison.

**2.** Procédé suivant la revendication 1, dans lequel l'identité proférée est une identité qui a été revendiquée comme étant celle du locuteur.

**3.** Procédé suivant la revendication 2, dans lequel la revendication d'identité a été faite par le locuteur.

**4.** Procédé suivant la revendication 3, comprenant en outre l'étape consistant à recevoir la revendication d'identité du locuteur.

**5.** Procédé suivant la revendication 4, comprenant en outre l'étape de vérification de l'identité revendiquée du locuteur sur la base du niveau de confiance déterminé.

6. Procédé suivant la revendication 1, dans lequel l'identité proférée est l'une d'une pluralité d'identités possibles, chaque identité possible ayant une séquence correspondante d'un ou plusieurs mots associés à un individu correspondant ayant l'identité possible.

7. Procédé suivant la revendication 6, comprenant en outre l'étape consistant à identifier le locuteur comme ayant l'identité proférée sur la base du niveau de confiance déterminé.

8. Procédé suivant la revendication 1, dans lequel les modèles de parole indépendants du locuteur comprennent des Modèles de Markov Cachés.

9. Procédé suivant la revendication 8, dans lequel les modèles de parole indépendants du locuteur comprennent des Modèles de Markov Cachés représentant des phonèmes individuels.

10. Procédé suivant la revendication 1, dans lequel les traits de la parole prononcée comprennent des données dans le domaine cepstral.

11. Procédé suivant la revendication 1, dans lequel l'étape de comparaison produit une séquence d'une ou plusieurs notes de vraisemblance cible correspondant à la séquence de mots secondaires, les notes de vraisemblance cible représentant la vraisemblance d'une concordance entre un des mots secondaires dans la séquence de mots secondaires et une partie correspondante de la parole prononcée.

12. Procédé suivant la revendication 11, dans lequel l'étape de détermination détermine le niveau de confiance selon lequel la parole prononcée représente la séquence d'un ou plusieurs mots associés à l'individu ayant l'identité proférée sur la base d'une séquence d'une ou plusieurs notes de confiance, chaque note de confiance ayant pour base l'une correspondante des notes de vraisemblance cible.

13. Procédé suivant la revendication 12, dans lequel les notes de confiance ont en outre pour base une séquence correspondante d'une ou plusieurs notes d'anti-vraisemblance, chaque note d'anti-vraisemblance représentant une vraisemblance d'une concordance entre un anti-modèle correspondant à l'un des mots secondaires dans la séquence de mots secondaires et la partie correspondante de la parole prononcée.

14. Procédé suivant la revendication 13, dans lequel les notes de confiance sont combinées pour produire une mesure de confiance normalisée représentant une fraction des mots secondaires dans la séquence de mots secondaires qui sont susceptibles de concorder avec la partie correspondante de la parole prononcée.

15. Procédé suivant la revendication 14, comprenant en outre l'étape, consistant à authentifier l'identité proférée comme étant celle du locuteur sur la base de la mesure de confiance normalisée.

16. Procédé suivant la revendication 14, dans lequel les étapes de comparaison et de détermination sont chacune exécutées une pluralité correspondante de fois sur la base d'une pluralité de paroles prononcées différentes et d'une pluralité correspondante de séquences différentes d'un ou plusieurs mots associés à l'individu ayant l'identité proférée, ce qui conduit à la production d'une pluralité correspondante des mesures de confiance normalisées, le procédé comprenant en outre l'étape consistant à authentifier l'identité proférée comme étant celle du locuteur sur la base d'une comparaison de la pluralité de mesures de confiance normalisées avec une pluralité correspondante de seuils.

17. Dispositif destiné à authentifier une identité proférée d'un locuteur, le dispositif comprenant :

un comparateur qui compare des traits d'une parole prononcée par le locuteur avec au moins une séquence d'un ou plusieurs modèles de parole indépendants du locuteur, l'une des séquences des modèles de parole correspondant à une parole représentant une séquence d'un ou plusieurs mots associés à un individu ayant l'identité proférée, cette séquence de modèles de parole étant déterminée sur la base d'une transcription de mots secondaires de la séquence donnée d'un ou plusieurs mots, dans lequel la transcription de mots secondaires comprend une séquence d'un ou plusieurs mots secondaires ;
un processeur qui détermine un niveau de confiance selon lequel la parole prononcée représente la séquence d'un ou plusieurs mots associés à l'individu ayant l'identité proférée sur la base de la comparaison.

**18.** Dispositif destiné à identifier une identité proférée d'un locuteur, le dispositif comprenant des moyens conçus pour exécuter chaque étape d'un procédé suivant l'une quelconque des revendications 1 à 16.

FIG. 1
(PRIOR ART)

TRAINING UTTERANCES:

"OPEN SESAME"
"OPEN SESAME"
"OPEN SESAME"

HMM TRAINING — 11

SPEAKER-DEPENDENT HMM

DATABASE — 12

ENROLLMENT SESSION
TEST SESSION

IDENTITY CLAIM

TEST UTTERANCE:

"OPEN SESAME"

SPEAKER VERIFICATION — 13

SCORES

FIG. 2

IDENTITY CLAIM → DATABASE — 22

"MURRAY HILL" FROM PROFILE

PASS-UTTERANCE "MURRAY HILL"

AUTOMATIC SPEECH RECOGNIZER — 21

RECOGNIZED PHRASE "MURRAY HILL"

TEXT COMPARATOR — 23

DECISION

FIG. 3

IDENTITY CLAIM

DATABASE
32

PHONE/SUBWORD TRANSCRIPTION FOR "MURRAY HILL"

$S_1...,S_m$

PASS-UTTERANCE "MURRAY HILL"

FORCED DECODING
31

SI HMM's FOR THE TRANSCRIPTION
$\lambda_1 ... \lambda_m$

PHONE BOUNDARIES

TARGET LIKELIHOODS
$P(X_1 \mid \lambda_1)...P(X_m \mid \lambda_m)$

ANTI-LIKELIHOODS
$P(X_1 \mid \bar{\lambda}_1)...P(X_m \mid \bar{\lambda}_m)$

ANTI-LIKELIHOOD COMPUTATION
33

ANTI HMM's FOR THE TRANSCRIPTION
$\bar{\lambda}_1 ... \bar{\lambda}_m$

CONFIDENCE MEASUREMENT
34

SCORES